# EUROPEAN PATENT APPLICATION

(11) **EP 2 445 037 A1**
(43) Date of publication of application: **25.04.2012**
(21) Application number: 10789598.9
(22) Date of filing: 14.06.2010
(51) Int. Cl.: H01M 4/133, H01M 4/1393, H01M 4/62, H01M 10/0525, H01M 10/0566

(54) **NEGATIVE ELECTRODE MATERIAL FOR NON-AQUEOUS ELECTROLYTE SECONDARY BATTERY, AND NON-AQUEOUS ELECTROLYTE SECONDARY BATTERY COMPRISING SAME**

(30) Priority: 16.06.2009 JP 2009142997; 16.06.2009 JP 2009142998; 18.06.2009 JP 2009145148; 24.06.2009 JP 2009149535
(71) Applicant: Sumitomo Chemical Company, Limited, Tokyo 104-8260 (JP)
(72) Inventor: KURAKANE, Kosuke, Ibaraki-shi Osaka 567-0841 (JP); INUI, Naoki, Yamatokoriyama-shi Nara 639-1123 (JP); SUZUKI, Junji, Toyonaka-shi Osaka 561-0802 (JP)
(74) Representative: Brunetti, Fabrizio
(86) International application number: PCT/JP2010/060407
(87) International publication number: WO 2010/147225

(57) **Abstract**

A negative electrode material for a non-aqueous electrolyte secondary battery, which comprises a negative electrode active material capable of absorbing and releasing a lithium ion and at least one salt selected from the group consisting of a carboxylic acid salt of an alkali metal, a carboxylic acid salt of an alkali earth metal, a sulfuric acid salt of an alkali metal, a sulfuric acid salt of an alkali earth metal, a boric acid salt of an alkali metal, a boric acid salt of an alkali earth metal, a phosphoric acid salt of an alkali metal and a phosphoric acid salt of an alkali earth metal.

## Description

### Field of the Invention

The present invention relates to a negative electrode material for a non-aqueous electrolyte secondary battery and a non-aqueous electrolyte secondary battery comprising the same.

### Background of the Invention

A negative electrode material comprising a halide of an alkali metal and/or a halide of an alkali earth metal, and a non-aqueous electrolyte secondary battery comprising the negative electrode material are described in JP 2006-310265 A.

### Disclosure of the Invention

The present invention provides:
<1> A negative electrode material for a non-aqueous electrolyte secondary battery, which comprises a negative electrode active material capable of absorbing and releasing a lithium ion and at least one salt selected from the group consisting of a carboxylic acid salt of an alkali metal, a carboxylic acid salt of an alkali earth metal, a sulfuric acid salt of an alkali metal, a sulfuric acid salt of an alkali earth metal, a boric acid salt of an alkali metal, a boric acid salt of an alkali earth metal, a phosphoric acid salt of an alkali metal and a phosphoric acid salt of an alkali earth metal;
<2> The negative electrode material for a non-aqueous electrolyte secondary battery according to <1>, wherein at least one salt is a carboxylic acid salt of an alkali metal, a sulfuric acid salt of an alkali metal, a boric acid salt of an alkali metal or a phosphoric acid salt of an alkali metal;
<3> The negative electrode material for a non-aqueous electrolyte secondary battery according to <1>, wherein at least one salt is a carboxylic acid salt of an alkali metal and/or a carboxylic acid salt of an alkali earth metal;
<4> The negative electrode material for a non-aqueous electrolyte secondary battery according to <1>, wherein at least one salt is a sulfuric acid salt of an alkali metal and/or a sulfuric acid salt of an alkali earth metal;
<5> The negative electrode material for a non-aqueous electrolyte secondary battery according to <1>, wherein at least one salt is a boric acid salt of an alkali metal and/or a boric acid salt of an alkali earth metal;
<6> The negative electrode material for a non-aqueous electrolyte secondary battery according to <1>, wherein at least one salt is a phosphoric acid salt of an alkali metal and/or a phosphoric acid salt of an alkali earth metal;
<7> The negative electrode material for a non-aqueous electrolyte secondary battery according to any of <1> to <6>, wherein the negative electrode active material contains graphite and/or a carbon material of which crystallinity is lower than that of graphite as a main component;
<8> The negative electrode material for a non-aqueous electrolyte secondary battery according to <7>, wherein a specific surface area of graphite and the carbon material of which crystallinity is lower than graphite is 1 to 600 m²/g;
<9> The negative electrode material for a non-aqueous electrolyte secondary battery according to <1>, <2>, <3>, <7> or <8>, wherein the carboxylic acid salt of an alkali metal is sodium acetate;
<10> The negative electrode material for a non-aqueous electrolyte secondary battery according to <1>, <2>, <4>, <7> or <8>, wherein the sulfuric acid salt of an alkali metal is sodium sulfate;
<11> The negative electrode material for a non-aqueous electrolyte secondary battery according to <1>, <2>. <5>, <7> or <8>, wherein the boric acid salt of an alkali metal is sodium borate;
<12> The negative electrode material for a non-aqueous electrolyte secondary battery according to <1>, <2>, <6>, <7> or <8>, wherein the phosphoric acid salt of an alkali metal is sodium phosphate;
<13> The negative electrode material for a non-aqueous electrolyte secondary battery according to any of <1> to <12>, which is obtained by mixing an aqueous solution containing at least one salt selected from the group consisting of a carboxylic acid salt of an alkali metal, a carboxylic acid salt of an alkali earth metal, a sulfuric acid salt of an alkali metal, a sulfuric acid salt of an alkali earth metal, a boric acid salt of an alkali metal, a boric acid salt of an alkali earth metal, a phosphoric acid salt of an alkali metal and a phosphoric acid salt of an alkali earth metal with a negative electrode active material capable of absorbing and releasing a lithium ion followed by removing water from the mixture obtained;
<14> The negative electrode material for a non-aqueous electrolyte secondary battery according to any of <1> to <13>, wherein the content of the salt is 50 to 10000 ppm in metal equivalent;
<15> The negative electrode material for a non-aqueous electrolyte secondary battery according to any of <1> to <14>, which further contains a binder and a solvent;
<16> The negative electrode material for a non-aqueous electrolyte secondary battery according to <15>, wherein the binder is at least one selected from the group consisting of polyvinylidene fluoride, polytetrafluoroethylene, fluorinated polyvinylidene fluoride, ethylene-propylene-diene ternary copolymer, styrene-butadiene rubber, acrylonitrile-butadiene rubber, fluoro-rubber, polyvinyl acetate, polymethyl methacrylate, polyethylene and nitrocellulose;
<17> The negative electrode material for a non-aqueous electrolyte secondary battery according to <15> or <16>, wherein the solvent is at least one selected from the group consisting of N-methylpyrrolidone, N,N-dimethylformamide, N,N-dimethylacetamide, methyl ethyl ketone, cyclohexanone, methyl acetate, methyl acrylate, diethyltriamine, N,N-dimethylaminopropylamine, ethylene oxide, tetrahydrofuran and water;
<18> A non-aqueous electrolyte secondary battery comprising a positive electrode comprising a positive electrode active material capable of absorbing and releasing a lithium ion, a negative electrode comprising the negative electrode material for a non-aqueous electrolyte secondary battery according to any of <1> to <17> and a non-aqueous electrolyte;
<19> The non-aqueous electrolyte secondary battery according to <18>, wherein the positive electrode active material is a lithium-transition metal composite oxide;
<20> The non-aqueous electrolyte secondary battery according to <19>, wherein the lithium-transition metal composite oxide contains manganese.

### Best Modes for Carrying Out the Invention

The negative electrode material for a non-aqueous electrolyte secondary battery of the present invention comprises a negative electrode active material capable of absorbing and releasing a lithium ion.

Examples of the negative electrode active material capable of absorbing and releasing a lithium ion include graphite, carbon materials having various degree of graphitization such as a carbon material being inferior to graphite in crystallinity such as a noncrystalline carbon material, and a metal particle capable of alloying with lithium. Graphite and a carbon material of which crystallinity is lower than that of graphite are preferable, and graphite is more preferable. Herein, "inferior to graphite in crystallinity" means its degree of graphitization is smaller than that of graphite.

Examples of graphite include natural graphite and synthetic graphite. Graphite having a low content of impurities is preferable, and as necessary, one purified with various purification means can be used. As graphite, one having big degree of graphitization wherein a surface separation (d002) of (002) surface measured by wide-angle X-ray diffraction method is less than 3.37 Å is preferably used.

Examples of synthetic graphite include one graphitized an organic material usually at a calcination temperature of more than 2500°C and 3200°C or less.

Examples of the carbon material being inferior to graphite in crystallinity include one calcined an organic material usually at a calcination temperature of 2500°C or less. The calcination temperature is preferably 600°C or more, more preferably 900°C or more, and especially preferably 950°C or more. While the upper limit thereof differs depending on the desired degree of graphitization, it is preferably 2000°C or less and more preferably 1400°C or less.

Specific examples of the organic material include coal-based heavy oils such as coal-tar pitch and carbonization liquefaction oil; straight-run based heavy oils such as atmospheric residue and vacuum residue; petroleum-based heavy oils such as cracking-based heavy oils such as ethylene tar produced as a by-product during the cracking of crude oil, naphtha or the like; aromatic hydrocarbons such as acenaphthylene, decacyclene and anthracene; nitrogen-containing cyclic compounds such as phenazine and acridine; sulfur-containing cyclic compounds such as thiophene; aliphatic cyclic compounds such as adamantane; polyphenylene such as biphenyl and terphenyl; polyvinyl esters such as polyvinyl chloride, polyvinyl acetate and polyvinyl butyral; thermoplastic polymers such as polyvinyl alcohol; polyacrylonitrile; natural polymers; polyphenylene sulfide; polyphenylene oxide; furfuryl alcohol resin; imide resins; thermosetting polymers such as phenol resins such as phenol-formaldehyde resin, and epoxy resins; biomass feedstocks such as cellulose and sawdust.

Additionally, as the negative electrode active material, that wherein the surface of the above-mentioned graphite having a high degree of graphitization (graphite wherein the surface separation (d002) of (002) surface measured by wide-angle X-ray diffraction method is less than 3.37 Å) is covered with a carbon material having smaller degree of graphitization than it is also preferable.

Those wherein the surface of the above-mentioned graphite having a high degree of graphitization is covered with the above-mentioned carbon material having smaller degree of graphitization than it can be obtained by covering the surface of graphite having a high degree of graphitization with the above-mentioned organic material followed by calcination. The ratio of graphite to sum of graphite and the carbon material having smaller degree of graphitization is preferably 80% by weight or more from the viewpoint of the capacity of the negative electrode of the battery and more preferably 85% by weight or more. Alternatively, it is preferably 99% by weight or less from the viewpoint of the covering effect of the carbon material having smaller degree of graphitization. The especially preferable weight ratio of graphite and the carbon material having smaller degree of graphitization is 85:15 to 99:1 (graphite:the carbon material having smaller degree of graphitization).

The average particle sizes of graphite and the carbon material being inferior to graphite in crystallinity are preferably 35 µm or less, more preferably 25 µm or less, and still more preferably 18 µm or less. Those are preferably 3 µm or more and more preferably 5 µn or more. The carbon material being inferior to graphite in crystallinity may be a secondary particle which plural particles are agglutinated. In this case, the average particle size of the secondary particle is preferably in the above-mentioned range, and the average particle size of the primary particle is preferably 15 µm or less.

Alternatively, specific surface area (BET specific surface area) of graphite and the carbon material being inferior to graphite in crystallinity measured by BET absorption method is preferably 1 to 600 m²/g, and more preferably 1 to 15 m²/g.

As the negative electrode active material, two or more kinds selected from the group consisting of graphite and the carbon material being inferior to graphite in crystallinity may be mixed to be used.

The negative electrode material for a non-aqueous electrolyte secondary battery of the present invention comprises at least one salt selected from the group consisting of a carboxylic acid salt of an alkali metal, a carboxylic acid salt of an alkali earth metal, a sulfuric acid salt of an alkali metal, a sulfuric acid salt of an alkali earth metal, a boric acid salt of an alkali metal, a boric acid salt of an alkali earth metal, a phosphoric acid salt of an alkali metal and a phosphoric acid salt of an alkali earth metal in addition to the negative electrode active material capable of absorbing and releasing a lithium ion.

Examples of the alkali metal in the carboxylic acid salt of an alkali metal, the sulfuric acid salt of an alkali metal, the boric acid salt of an alkali metal and the phosphoric acid salt of an alkali metal include Li, Na, K, Rb and Cs, and Na is preferable. Examples of the alkali earth metal in the carboxylic acid salt of an alkali earth metal, the sulfuric acid salt of an alkali earth metal, the boric acid salt of an alkali earth metal and the phosphoric acid salt of an alkali earth metal include Be, Mg, Ca, Sr and Ba.

Examples of the carboxylic acid salt of an alkali metal include a carboxylic acid salt having 1 to 4 carbon atoms of an alkali metal such as formic acid salt of an alkali metal, acetic acid salt of an alkali metal, propionic acid salt of an alkali metal and butyric acid salt of an alkali metal, and acetic acid salt of an alkali metal is preferable, and sodium acetate is more preferable. Examples of the carboxylic acid salt of an alkali earth metal include a carboxylic acid salt having 1 to 4 carbon atoms of an alkali earth metal such as formic acid salt of an alkali earth metal, acetic acid salt of an alkali earth metal, propionic acid salt of an alkali earth metal and butyric acid salt of an alkali earth metal.

As the sulfuric acid salt of an alkali metal, sodium sulfate is preferable.

Examples of the boric acid salt include orthoborates, diborates, metaborates, tetraborates, pentaborates and octaborates, and tetraborates are preferable. Among them, more preferred is sodium tetraborate.

Examples of the phosphoric acid salt include alkali metal dihydrogen phosphates such as sodium dihydrogen phosphate, dialkali metal hydrogen phosphates such as disodium hydrogen phosphate, trialkali metal phosphates such as trisodium phosphate, alkali earth metal dihydrogen phosphates such as calcium dihydrogen phosphate, dialkali earth metal hydrogen phosphates such as dicalcium hydrogen phosphate, trialkali earth metal phosphates such as tricalcium phosphate, and trialkali metal phosphates are preferable, and trisodium phosphate is more preferable.

The negative electrode material for a non-aqueous electrolyte secondary battery of the present invention preferably comprises at least one salt selected from the group consisting of a carboxylic acid salt of an alkali metal, a sulfuric acid salt of an alkali metal, a boric acid salt of an alkali metal and a phosphoric acid salt of an alkali metal.

The negative electrode material for a non-aqueous electrolyte secondary battery of the present invention preferably comprises a carboxylic acid salt of an alkali metal, a sulfuric acid salt of an alkali metal, a boric acid salt of an alkali metal or a phosphoric acid salt of an alkali metal.

The salt is preferably a salt not dissolved or difficult to be dissolved in an electrolyte. When the negative electrode material is prepared, the salt is generally used in a form of an aqueous solution, and therefore, a salt having high solubility in water is preferable.

While the content of the salt in the negative electrode material for a non-aqueous electrolyte secondary battery of the present invention is not limited, it is preferably 50 to 10000 ppm in metal equivalent, more preferably 200 to 9000 ppm and especially preferably 500 to 5000 ppm. The content of the salt can be calculated, for example, by extracting the salt contained in the negative electrode material by dispersing the negative electrode material in an enough amount of water and then, measuring the amount of the salt extracted by a method such as inductively-coupled plasma emission spectrometric analysis (ICP-AES).

The negative electrode material for a non-aqueous electrolyte secondary battery of the present invention can be prepared, for example, by a method comprising removing water by filtration or drying from the mixture obtained by mixing an aqueous solution of the salt with the negative electrode active material. The method is effective from the viewpoint of homogeneously containing the salt in the negative electrode material using a little amount of the salt. In the negative electrode material prepared by said method, it is presumed that the salt exists relatively homogeneously so that it covers the surface of the negative electrode material. For checking whether the salt exist in the negative electrode material or not, surface analysis such as electron microscope (SEM) observation and time-of-flight secondary ion mass spectrometry apparatus (TOF-SIMS).

The content of the salt in the negative electrode material can be adjusted by adjusting the concentration of tha salt in the aqueous solution of the salt used.

The negative electrode material for a non-aqueous electrolyte secondary battery of the present invention can further contain a binder and a solvent, and it can be obtained by mixing the negative electrode material containing the negative electrode active material and the salt, a binder and a solvent.

Examples of the binder include polyvinylidene fluoride, polytetrafluoroethylene, fluorinated polyvinylidene fluoride, ethylene-propylene-diene ternary copolymer (EPDM), styrene-butadiene rubber (SBR), acrylonitrile-butadiene rubber (NBR), fluoro-rubber, polyvinyl acetate, polymethyl methacrylate, polyethylene and nitrocellulose. The used amount of the binder to the negative electrode active material in the negative electrode material is preferably 0.1 to 20% by weight, more preferably 0.5 to 10% by weight, and especially preferably 1 to 5% by weight.

As the solvent, an organic solvent capable of dissolving the binder therein is usually used, and specific examples thereof include N-methylpyrrolidone, N,N-dimethylformamide, N,N-dimethylacetamide, methyl ethyl ketone, cyclohexanone, methyl acetate, methyl acrylate, diethyltriamine, N,N-dimethylaminopropylamine, ethylene oxide, tetrahydrofuran and water. These solvents may be used alone or two or more kinds thereof may be used in combination. When water is used as the solvent, a dispersing agent or a thickener may be further used. The used amount of the solvent is preferably 0.8 to 2.0 parts by weight relative to 1 part by weight of the negative electrode active material in the negative electrode material.

The negative electrode material for a non-aqueous electrolyte secondary battery of the present invention is used for forming a negative electrode active material layer of the non-aqueous electrolyte secondary battery.

The non-aqueous electrolyte secondary battery comprising a positive electrode comprising a positive electrode active material capable of absorbing and releasing a lithium ion, a negative electrode comprising the negative electrode material for a non-aqueous electrolyte secondary battery of the present invention and a non-aqueous electrolyte will be illustrated below.

The non-aqueous electrolyte contains an organic solvent and a lithium salt. Examples of the solvent include carbonate solvents such as dimethyl carbonate, diethyl carbonate, ethyl methyl carbonate, propylene carbonate, ethylene carbonate and vinylene carbonate; ether solvents such as tetrahydrofuran, 2-methyltetrahydrofuran, 1,4-dioxane, 1,2-dimethoxyethane, 1,2-diethoxyethane, 1,3-dioxolan, 4-methyl-1,3-dioxolan and diethyl ether; ketone solvents such as 4-methyl-2-pentanone; lactone solvents such as γ-butyrolactone; sulfone solvents such as sulfolane and methylsulfolane; nitrile solvents such as acetonitrile, propionitrile, benzonitrile, butyronitrile and valeronitrile; chlorinated hydrocarbon solvents such as 1,2-dichloroethane; amide solvents such as N,N-dimethylformamide and N,N-dimethylsulfoxide; and phosphonate solvents such as trimethyl phosphate and triethyl phosphate. These non-aqueous electrolytes may be used alone, and two or more kinds thereof may be used in combination.

The above-mentioned non-aqueous electrolyte preferably contains a solvent having high dielectric constant in order to dissociating the electrolyte. Herein, "solvent having high dielectric constant" means a solvent of which specific dielectric constant at 25°C is 20 or more. As the solvent having high dielectric constant, ethylene carbonate, propylene carbonate and a solvent wherein a hydrogen atom thereof is replaced by other element such as a halogen, an alkyl group or the like are preferable.

The ratio of the solvent having high dielectric constant in the non-aqueous electrolyte is preferably 20% by weight or more, more preferably 30% by weight or more, and especially preferably 40% by weight or more.

The lithium salt is not limited, and known lithium salt can be used. Specific examples thereof include LiC10₄, LiAsF₆, LiPF₆, LiBF₄, LiB(C₆H₅)₄, LiC1, LiBr, CH₃SO₃Li, CF₃SO₃Li, LiN(SO₂CF₃)_{2,} LiN(SO₂C₂F₅)₂, LiC(SO₂CF₃)₃ and LiN(SO₃CF₃)₂. These lithium salt may be used alone, and two or more kinds thereof may be mixed to be used.

The concentration of the lithium salt in the non-aqueous electrolyte is preferably 0.5 to 2 mol/L, and more preferably 0.75 to 1.5 mol/L.

The positive electrode comprises a positive electrode active material capable of absorbing and releasing a lithium ion, and usually further contains a binder and a conductive agent. The positive electrode preferably consisting of a positive electrode laminated material layer containing the positive electrode active material, the binder and the conducting agent, and a positive current collector.

The positive electrode active material may be one capable of absorbing and releasing a lithium ion, and among them, preferred is a lithium-transition metal composite oxide. Examples of the lithium-transition metal composite oxide include lithium-manganese oxides such as LiMn₂O₄ and LiMnO₂, lithium-nickel oxides such as LiNiO₂, lithium-cobalt oxides such as LiCoO₂, lithium-iron oxides such as LiFeO₂, lithium-chromium oxides such as LiCrO₂, lithium-vanadium oxides such as Li₁₊ₓV₃O₈ and LiV₂O₄, lithium-titanium oxides such as LiTi₂O₄, and lithium-copper oxides such as Li_{z}CuO₂ and LiCuO₂. Further, a lithium-transition metal composite oxide wherein a part of main transition metal element is replaced by the other metal element may be used in order to stabilizing on discharge and charge. Among them, preferred is a positive electrode active material containing manganese, and more preferred is a lithium-manganese composite oxide, and especially preferred are lithium-manganese composite oxides having a spinel structure represented by LiMn₂O₄ and LiNi_{1/3}Mn_{1/3}Co_{1/3}O₂ and LiNi_{1/2}Mn_{1/2}O₂ having a laminated structure.

As the positive electrode active material, two or more kinds of one capable of absorbing and releasing a lithium ion may be used in combination.

Examples of the binder used for the positive electrode include polyvinylidene fluoride, polytetrafluoroethylene, fluorinated polyvinylidene fluoride, ethylene-propylene-diene ternary copolymer (EPDM), styrene-butadiene rubber (SBR), acrylonitrile-butadiene rubber (NBR), fluoro-rubber, polyvinyl acetate, polymethyl methacrylate, polyethylene and nitrocellulose. The ratio of the binder in the positive electrode laminated material layer is preferably 0.1% by weight or more, more preferably 1% by weight or more, and still more preferably 5% by weight or more, and preferably 80% by weight or less, more preferably 60% by weight or less, and still more preferably 40% by weight or less, and especially preferably 10% by weight or less.

Examples of the conducting agent include carbon materials such as graphite such as natural graphite and synthetic graphite, carbon black such as acetylene black, and amorphous carbon such as needle coke. The ration of the conducting agentin the positive electrode laminated material layer is preferably 0.01 to 50% by weight, more preferably 0.1 to 30% by weight, still more preferably 1 to 15% by weight.

As the material of the positive current collector, aluminum, stainless steel and nickel-coated steel is preferable, and aluminum is more preferable. The thickness of the current collector is preferably 1 to 1000 µm, and more preferably 5 to 500 µm.

The positive electrode can be prepared by mixing the positive electrode active material, the binder, the conductive agent, the solvent, and the other additives used as necessary, followed by applying the slurry obtained onto the current collector and drying it.

Examples of the solvent include organic solvents capable of generally dissolving the binder therein, and examples thereof include N-methylpyrrolidone, N,N-dimethylformamide, N,N-dimethylacetamide, methyl ethyl ketone, cyclohexanone, methyl acetate, methyl acrylate, diethyltriamine, n,N-dimethylaminopropylamine, ethylene oxide and tetrahydrofuran. These solvents may be used alone, and two or more kinds thereof may be used in combination. Alternatively, water can be also used as the solvent together with a dispersing agent or a thickener.

The thickness of the positive electrode laminated material layer is preferably 1 to 1000 µm, and more preferably 10 to 200 µm.

The positive electrode laminated material layer is preferably consolidated with roller press or the like in order to improving the filling density of the positive electrode active material therein.

The negative electrode contains the negative electrode material of the present invention. The negative electrode usually consisting of a negative electrode laminated material layer containing the negative electrode material of the present invention, the binder and if necessary, the conducting agent, and the current collector, and the negative electrode laminated material layer is usually formed on the current collector. Two or more kinds of the negative electrode material of the present invention can be used in combination. The negative electrode material of the present invention and a negative electrode material other than the negative electrode material of the present invention can be also used in combination. Examples of the conducting agent include the same as those used in the positive electrode.

The ratio of the binder to the negative electrode active material in the negative electrode material is preferably 0.1 to 20% by weight, more preferably 0.5 to 10% by weight and still more preferably 1 to 5% by weight.

Examples of the current collector of the negative electrode include copper, nickel, stainless steel and nickel-coated steel, and copper is preferable. The thickness of the current collector is preferably 1 to 1000 µm, and more preferably 5 to 500 µm.

The negative electrode can be also prepared by mixing the negative electrode material, the binder, the solvent, and the conducting agent and the other additives used as necessary, followed by applying the slurry obtained onto the current collector and drying it. When the negative electrode material containing the binder and the solvent is used, the negative electrode can be prepared by mixing the negative electrode material, and the conducting agent and the other additives used as necessary, without newly using the binder and the solvent, followed by applying the slurry obtained onto the current collector and drying it. Examples of the solvent include the same as those which may be included in the negative electrode material.

The thickness of the negative electrode laminated material layer is preferably 1 to 1000 µm, and more preferably 10 to 200 µm.

The negative electrode laminated material layer is preferably consolidated with roller press or the like in order to improving the filling density of the negative electrode active material therein.

In the non-aqueous electrolyte secondary battery of the present invention, a separator preferably intervenes between the positive electrode and the negative electrode. As the separator, a microporous polymer film is usually used, and a polymer film comprising nylon, cellulose acetate, nitrocellulose, polysulfone, polyacrylonitrile, polyvinylidene fluoride, or a polyolefin polymer such as polypropylene, polyethylene and polybutene is preferable. From the viewpoint of the chemical and electrochemical stability of the separator, a polyolefin polymer film is more preferable, and polyethylene film is more preferable from the viewpoint of the self-obstruction temperature of the separator.

In the case of the separator made of polyethylene, it is preferably formed with a polyethylene having ultrahigh molecular weight from the viewpoint of the property of maintaining of the form at high temperature. Its molecular weight is preferably 500000 to 5000000, more preferably 1000000 to 4000000, and especially preferably 1500000 to 3000000.

The non-aqueous electrolyte secondary battery of the present invention is produced by assembling the positive electrode, the negative electrode, the non-aqueous electrolyte and as necessary, the separator to a suitable shape. Further, the other constituent such as outer covering case can be used as necessary.

The shape of the battery is not limited, and it can be suitably selected depending on the use among the various shapes generally adopted. Examples of the shapes generally adopted include a cylinder type having a spiral of sheet electrode and a separator, a cylinder type having inside-out structure in which a pellet electrode and a separator are combined, a coin type laminated a pellet electrode and a separator, and a laminate type laminated a sheet electrode and a separator. The method of assembling the battery is not also limited, it can be suitably selected among various methods generally used in accordance with the shape of the desired battery.

While common embodiments of the non-aqueous electrolyte secondary battery of the present invention is illustrated above, the non-aqueous electrolyte secondary battery of the present invention is not limited to the above-mentioned embodiments, and it can be carried out adding various deformities as long as it exceeds its summary.

### Examples

The present invention will be illustrated in more detail by Examples bellow, but the present invention is not limited to these Examples.

### Example 1

Zero point three (0.3) gram of natural graphite of which BET specific surface area was 6.0 m²/g and of which surface separation (d₀₀₂) of (002) surface measured by wide-angle X-ray diffraction method was 3.354 Å was dispersed in 100 mL of 0.1% by weight aqueous sodium acetate solution. The dispersion liquid obtained was stirred for 30 minutes, and then, suction filtration was conducted. The solid obtained was dried in a vacuum at 100°C for 6 hours to obtain natural graphite on which sodium acetate adhered (negative electrode material).

Into N-methyl-2-pyrrolidone, 10 parts by weight of the negative electrode material and 1 part by weight of polyvinylidene fluoride (binder) were added to obtain slurry. The slurry was applied on a copper foil of a current collector and then, dried and further pressed to prepare a negative electrode.

### Example 2

A negative electrode was prepared according to the same manner as that in Example 1 except that 0.5% by weight aqueous sodium acetate solution was used in place of 0.1% by weight aqueous sodium acetate solution.

### Comparative Example 1

A negative electrode was prepared according to the same manner as that in Example 1 except that 0.1% by weight aqueous sodium chloride solution was used in place of 0.1% by weight aqueous sodium acetate solution.

### Comparative Example 2

A negative electrode was prepared according to the same manner as that in Example 1 except that 0.5% by weight aqueous sodium chloride solution was used in place of 0.1% by weight aqueous sodium acetate solution.

### Example 3

A negative electrode was prepared according to the same manner as that in Example 1 except that synthetic graphite of which BET specific surface area was 4.0 m²/g and of which surface separation (d₀₀₂) of (002) surface measured by wide-angle X-ray diffraction method was 3.358 Å was used in place of natural graphite of which BET specific surface area is 6.0 m²/g and of which surface separation (d₀₀₂) of (002) surface measured by wide-angle X-ray diffraction method is 3.354 Å.

### Example 4

A negative electrode was prepared according to the same manner as that in Example 3 except that 0.5% by weight aqueous sodium acetate solution was used in place of 0.1% by weight aqueous sodium acetate solution.

### Comparative Example 3

A negative electrode was prepared according to the same manner as that in Example 3 except that 0.1% by weight aqueous sodium chloride solution was used in place of 0.1% by weight aqueous sodium acetate solution.

### Comparative Example 4

A negative electrode was prepared according to the same manner as that in Example 3 except that 0.5% by weight aqueous sodium chloride solution was used in place of 0.1% by weight aqueous sodium acetate solution.

### Example 5

A negative electrode was prepared according to the same manner as that in Example 1 except that hard carbon of which BET specific surface area was 4.0 m²/g and of which surface separation (d₀₀₂) of (002) surface measured by wide-angle X-ray diffraction method was 3.786 Å was used in place of natural graphite of which BET specific surface area is 6.0 m²/g and of which surface separation (d₀₀₂) of (002) surface measured by wide-angle X-ray diffraction method is 3.354 Å.

### Example 6

A negative electrode was prepared according to the same manner as that in Example 5 except that 0.5% by weight aqueous sodium acetate solution was used in place of 0.1% by weight aqueous sodium acetate solution.

### Comparative Example 5

A negative electrode was prepared according to the same manner as that in Example 5 except that 0.1% by weight aqueous sodium chloride solution was used in place of 0.1% by weight aqueous sodium acetate solution.

### Comparative Example 6

A negative electrode was prepared according to the same manner as that in Example 5 except that 0.5% by weight aqueous sodium chloride solution was used in place of 0.1% by weight aqueous sodium acetate solution.

### Preparation Example 1 of a non-aqueous electrolyte secondary battery

Each of the non-aqueous electrolyte secondary batteries was prepared by using 2032 typed coin cell, the negative electrode obtained in each of Examples 1 to 4 and Comparative Examples 1 to 4 as a working electrode, lithium metal as a counter electrode, and one wherein LiPF₆ was dissolved in a mixed solvent of ethylene carbonate and diethyl carbonate (ethylene carbonate:diethyl carbonate=1:1 (weight ratio)) (LiPF₆ concentration: 1 mol/L) as an electrolyte.

### Test Examples 1 to 8

The evaluation of the electrochemical property of the non-aqueous electrolyte secondary battery prepared in Preparation Example 1 of a non-aqueous electrolyte secondary battery was conducted according to the following test method. The results are shown in Table 1 and Table 2.

### <Test Method>

A charge (absorption of a lithium ion) and a discharge (release of a lithium ion) were conducted with constant current of current density of C/2 (175 mA/g) in a range of 0.0 to 2.0 V based on counter electrode Li/Li⁺, and their capacities and efficiencies were measured.

In Table 1 and Table 2, the results of analyzing the content of sodium included in the negative electrode material used with an inductively-coupled plasma emission spectrometric analysis apparatus (ICP-AES) are also shown.

Further, "initial discharge capacity" in each of Tables below means the first discharge capacity of the above-mentioned charge-discharge cycles, and "initial efficiency" means a ratio (percentage) of discharging amount of the first cycle to charging amount of the first cycle of the above-mentioned charge-discharge cycle.

**[Table 1]**

| Test Example | Negative Electrode material Used | Content of Na in Negative Electrode Material (ppm) | Initial Discharge Capacity (mAh/g) | Initial Efficiency (%) | Discharge Initial Capacity at 5th-Cycle (mAh/g) |
|---|---|---|---|---|---|
| 1 | Negative electrode prepared in Example 1 | 94 | 251 | 90 | 200 |
| 2 | Negative electrode prepared in Example 2 | 410 | 213 | 89 | 185 |
| 3 | Negative electrode prepared in Comparative Example 1 | 200 | 244 | 91 | 207 |
| 4 | Negative electrode prepared in Comparative Example 2 | 1100 | 250 | 90 | 231 |

**[Table 2]**

| Test Example | Negative Electrode Material Used | Content of Na in Negative Electrode Material (ppm) | Initial Discharge Capacity (mAh/g) | Initial Efficiency (%) | Discharge Capacity at 5th-Cycle (mAh/g) |
|---|---|---|---|---|---|
| 5 | Negative electrode prepared in Example 3 | 82 | 263 | 92 | 257 |
| 6 | Negative electrode 270 prepared in Example 4 | 270 | 221 | 92 | 224 |
| 7 | Negative electrode prepared in Comparative Example 3 | 180 | 204 | 91 | 183 |
| 8 | Negative electrode prepared in Comparative Example 4 | 560 | 219 | 91 | 196 |

### Preparation Example 2 of a non-aqueous electrolyte secondary battery

Each of the non-aqueous electrolyte secondary batteries was prepared by using 2032 typed coin cell, the negative electrode obtained in each of Examples 5 to 6 and Comparative Examples 5 to 6 as a working electrode, lithium metal as a counter electrode, and one wherein LiPF₆ was dissolved in propylene carbonate (LiPF₆ concentration: 1 mol/L) as an electrolyte.

### Test Examples 9 to 12

The evaluation of the electrochemical property of the non-aqueous electrolyte secondary battery prepared in Preparation Example 2 of a non-aqueous electrolyte secondary battery was conducted according to the test method described in the above-mentioned Test Examples 1 to 8. The results are shown in Table 3. In Table 3, the results of analyzing the content of sodium included in the negative electrode material used with an inductively-coupled plasma emission spectrometric analysis apparatus (ICP-AES) are also shown.

**[Table 3]**

| Test Example | Negative Electrode Material Used | Content of Na in Negative Electrode Material (ppm) | Initial Discharge Capacity (mAh/g) | Initial Efficiency (%) | Discharge Capacity at 5th-Cycle (mAh/g) |
|---|---|---|---|---|---|
| 9 | Negative electrode prepared in Example 5 | 74 | 199 | 77 | 182 |
| 10 | Negative electrode prepared in Example 6 | 490 | 200 | 77 | 180 |
| 11 | Negative electrode prepared in Comparative Example 5 | 100 | 185 | 77 | 167 |
| 12 | Negative electrode prepared in Comparative Example 6 | 7100 | 188 | 77 | 170 |

### Example 7

Zero point three (0.3) gram of natural graphite of which BET specific surface area was 6.0 m²/g and of which surface separation (d₀₀₂) of (002) surface measured by wide-angle X-ray diffraction method was 3.354 Å was dispersed in 100 mL of 0.1% by weight aqueous sodium sulfate solution. The dispersion liquid obtained was stirred for 30 minutes, and then, suction filtration was conducted. The solid obtained was dried in a vacuum at 100°C for 6 hours to obtain natural graphite on which sodium sulfate adhered (negative electrode material).

Into N-methyl-2-pyrrolidone, 9 parts by weight of the negative electrode material and 1 part by weight of polyvinylidene fluoride (binder) were added to obtain slurry. The slurry was applied on a copper foil of a current collector and then, dried and further pressed to prepare a negative electrode.

### Example 8

A negative electrode was prepared according to the same manner as that in Example 7 except that 0.5% by weight aqueous sodium sulfate solution was used in place of 0.1% by weight aqueous sodium sulfate solution.

### Comparative Example 7

A negative electrode was prepared according to the same manner as that in Example 1 except that 0.1% by weight aqueous sodium chloride solution was used in place of 0.1% by weight aqueous sodium sulfate solution.

### Comparative Example 8

A negative electrode was prepared according to the same manner as that in Example 7 except that 0.5% by weight aqueous sodium chloride solution was used in place of 0.1% by weight aqueous sodium sulfate solution.

### Example 9

A negative electrode was prepared according to the same manner as that in Example 7 except that synthetic graphite of which BET specific surface area was 4.0 m²/g and of which surface separation (d₀₀₂) of (002) surface measured by wide-angle X-ray diffraction method was 3.358 Å was used in place of natural graphite of which BET specific surface area was 6.0 m²/g and of which surface separation (d₀₀₂) of (002) surface measured by wide-angle X-ray diffraction method was 3.354 Å.

### Example 10

A negative electrode was prepared according to the same manner as that in Example 9 except that 0.5% by weight aqueous sodium sulfate solution was used in place of 0.1% by weight aqueous sodium sulfate solution.

### Comparative Example 9

A negative electrode was prepared according to the same manner as that in Example 9 except that 0.1% by weight aqueous sodium chloride solution was used in place of 0.1% by weight aqueous sodium sulfate solution.

### Comparative Example 10

A negative electrode was prepared according to the same manner as that in Example 9 except that 0.5% by weight aqueous sodium chloride solution was used in place of 0.1% by weight aqueous sodium sulfate solution.

### Example 11

A negative electrode was prepared according to the same manner as that in Example 9 except that hard carbon of which BET specific surface area was 4.0 m²/g and of which surface separation **(d₀₀₂)** of (002) surface measured by wide-angle X-ray diffraction method was 3.786 Å was used in place of natural graphite of which BET specific surface area was 6.0 m²/g and of which surface separation (d₀₀₂) of (002) surface measured by wide-angle X-ray diffraction method was 3.354 Å.

### Example 12

A negative electrode was prepared according to the same manner as that in Example 11 except that 0.5% by weight aqueous sodium sulfate solution was used in place of 0.1% by weight aqueous sodium sulfate solution.

### Comparative Example 11

A negative electrode was prepared according to the same manner as that in Example 11 except that 0.1% by weight aqueous sodium chloride solution was used in place of 0.1% by weight aqueous sodium sulfate solution.

### Comparative Example 12

A negative electrode was prepared according to the same manner as that in Example 11 except that 0.5% by weight aqueous sodium chloride solution was used in place of 0.1% by weight aqueous sodium sulfate solution.

### Preparation Example 3 of a non-aqueous electrolyte secondary battery

Each of the non-aqueous electrolyte secondary batteries was prepared by using 2032 typed coin cell, the negative electrode obtained in each of Examples 7 to 10 and Comparative Examples 7 to 10 as a working electrode, lithium metal as a counter electrode, and one wherein LiPF₆ was dissolved in a mixed solvent of ethylene carbonate and diethyl carbonate (ethylene carbonate:diethyl carbonate=1:1 (weight ratio)) (LiPF₆ concentration: 1 mol/L) as an electrolyte.

### Test Examples 13 to 20

The evaluation of the electrochemical property of the non-aqueous electrolyte secondary battery prepared in Preparation Example 3 of a non-aqueous electrolyte secondary battery was conducted according to the test method described in the above-mentioned Test Examples 1 to 8. The results are shown in Table 4 and Table 5.

In Table 4 and Table 5, the results of analyzing the content of sodium included in the negative electrode material used with an inductively-coupled plasma emission spectrometric analysis apparatus (ICP-AES) are also shown.

**[Table 4]**

| Test Example | Negative Electrode Material Used | Content of Na in Negative Electrode Material (ppm) | Initial Discharge Capacity (mAh/g) | Initial Efficiency (%) | Discharge Capacity at 5th-Cycle (mAh/g) |
|---|---|---|---|---|---|
| 13 | Negative electrode prepared in Example 7 | 94 | 241 | 91 | 252 |
| 14 | Negative electrode prepared in Example 8 | 410 | 262 | 91 | 262 |
| 15 | Negative electrode prepared in Comparative Example 7 | 200 | 244 | 91 | 207 |
| 16 | Negative electrode prepared in Comparative Example 8 | 1100 | 250 | 90 | 231 |

**[Table 5]**

| Test Example | Negative Electrode Material Used | Content of Na in Negative Electrode Material (ppm) | Initial Discharge Capacity (mAh/g) | Initial Efficiency (%) | Discharge Capacity at 5th-Cycle (mAh/g) |
|---|---|---|---|---|---|
| 17 | Negative electrode prepared in Example 9 | 82 | 234 | 91 | 230 |
| 18 | Negative electrode prepared in Example 10 | 270 | 201 | 90 | 189 |
| 19 | Negative electrode prepared in Comparative Example 9 | 180 | 204 | 91 | 183 |
| 20 | Negative electrode prepared in Comparative Example 10 | 560 | 219 | 91 | 196 |

### Preparation Example 4 of a non-aqueous electrolyte secondary battery

Each of the non-aqueous electrolyte secondary batteries was prepared by using 2032 typed coin cell, the negative electrode obtained in each of Examples 11 to 12 and Comparative Examples 11 to 12 as a working electrode, lithium metal as a counter electrode, and one wherein LiPF₆ was dissolved in propylene carbonate (LiPF₆ concentration: 1 mol/L) as an electrolyte.

### Test Examples 21 to 24

The evaluation of the electrochemical property of the non-aqueous electrolyte secondary battery prepared in Preparation Example 4 of a non-aqueous electrolyte secondary battery was conducted according to the test method described in the above-mentioned Test Examples 1 to 8. The results are shown in Table 6.

In Table 3, the results of analyzing the content of sodium included in the negative electrode material used with an inductively-coupled plasma emission spectrometric analysis apparatus (ICP-AES) are also shown.

**[Table 6]**

| Test Example | Negative Electrode Material Used | Content of Na in Negative Electrode Material (ppm) | Initial Discharge Capacity (mAh/g) | Initial Efficiency (%) | Discharge Capacity at. 5th-Cycle (mAh/g) |
|---|---|---|---|---|---|
| 21 | Negative electrode prepared in Example 11 | 77 | 187 | 77 | 171 |
| 22 | Negative electrode prepared in Example 12 | 550 | 199 | 77 | 176 |
| 23 | Negative electrode prepared in Comparative Example 11 | 100 | 185 | 77 | 167 |
| 24 | Negative electrode prepared in Comparative Example 12 | 710 | 188 | 77 | 170 |

### Example 13

Zero point three (0.3) gram of natural graphite of which BET specific surface area was 6.0 m²/g and of which surface separation (d₀₀₂) of (002) surface measured by wide-angle X-ray diffraction method was 3.354 Å was dispersed in 100 mL of 0.1% by weight aqueous sodium tetraborate solution. The dispersion liquid obtained was stirred for 30 minutes, and then, suction filtration was conducted. The solid obtained was dried in a vacuum at 100°C for 6 hours to obtain natural graphite on which sodium tetraborate adhered (negative electrode material).

Into N-methyl-2-pyrrolidone, 9 parts by weight of the negative electrode material and 1 part by weight of polyvinylidene fluoride (binder) were added to obtain slurry. The slurry was applied on a copper foil of a current collector and then, dried and further pressed to prepare a negative electrode.

### Example 14

A negative electrode was prepared according to the same manner as that in Example 13 except that 0.5% by weight aqueous sodium tetraborate solution was used in place of 0.1% by weight aqueous sodium tetraborate solution.

### Comparative Example 13

A negative electrode was prepared according to the same manner as that in Example 13 except that 0.1% by weight aqueous sodium chloride solution was used in place of 0.1% by weight aqueous sodium tetraborate solution.

### Comparative Example 14

A negative electrode was prepared according to the same manner as that in Example 13 except that 0.5% by weight aqueous sodium chloride solution was used in place of 0.1% by weight aqueous sodium tetraborate solution.

### Example 15

A negative electrode was prepared according to the same manner as that in Example 13 except that synthetic graphite of which BET specific surface area was 4.0 m²/g and of which surface separation (d₀₀₂) of (002) surface measured by wide-angle X-ray diffraction method was 3.358 Å was used in place of natural graphite of which BET specific surface area was 6.0 m²/g and of which surface separation (d₀₀₂) of (002) surface measured by wide-angle X-ray diffraction method was 3.354 Å.

### Example 16

A negative electrode was prepared according to the same manner as that in Example 15 except that 0.5% by weight aqueous sodium tetraborate solution was used in place of 0.1% by weight aqueous sodium tetraborate solution.

### Comparative Example 15

A negative electrode was prepared according to the same manner as that in Example 15 except that 0.1% by weight aqueous sodium chloride solution was used in place of 0.1% by weight aqueous sodium tetraborate solution.

### Comparative Example 16

A negative electrode was prepared according to the same manner as that in Example 15 except that 0.5% by weight aqueous sodium chloride solution was used in place of 0.1% by weight aqueous sodium tetraborate solution.

### Example 17

A negative electrode was prepared according to the same manner as that in Example 13 except that hard carbon of which BET specific surface area was 4.0 m²/g and of which surface separation (d₀₀₂) of (002) surface measured by wide-angle X-ray diffraction method was 3.786 Å was used in place of natural graphite of which BET specific surface area was 6.0 m²/g and of which surface separation (d₀₀₂) of (002) surface measured by wide-angle X-ray diffraction method was 3.354 Å.

### Example 18

A negative electrode was prepared according to the same manner as that in Example 17 except that 0.5% by weight aqueous sodium tetraborate solution was used in place of 0.1% by weight aqueous sodium tetraborate solution.

### Comparative Example 17

A negative electrode was prepared according to the same manner as that in Example 17 except that 0.1% by weight aqueous sodium chloride solution was used in place of 0.1% by weight aqueous sodium tetraborate solution.

### Comparative Example 18

A negative electrode was prepared according to the same manner as that in Example 17 except that 0.5% by weight aqueous sodium chloride solution was used in place of 0.1% by weight aqueous sodium tetraborate solution.

### Preparation Example 5 of a non-aqueous electrolyte secondary battery

Each of the non-aqueous electrolyte secondary batteries was prepared by using 2032 typed coin cell, the negative electrode obtained in each of Examples 13 to 16 and Comparative Examples 13 to 16 as a working electrode, lithium metal as a counter electrode, and one wherein LiPF₆ was dissolved in a mixed solvent of ethylene carbonate and diethyl carbonate (ethylene carbonate:diethyl carbonate=1:1 (weight ratio)) (LiPF₆ concentration: 1 mol/L) as an electrolyte.

### Test Examples 25 to 32

The evaluation of the electrochemical property of the non-aqueous electrolyte secondary battery prepared in Preparation Example 5 of a non-aqueous electrolyte secondary battery was conducted according to the test method described in the above-mentioned Test Examples 1 to 8. The results are shown in Table 7 and Table 8.

In Table 7 and Table 8, the results of analyzing the content of sodium included in the negative electrode material used with an inductively-coupled plasma emission spectrometric analysis apparatus (ICP-AES) are also shown.

**[Table 7]**

| Test Example | Negative Electrode Material Used | Content of Na in Negative Electrode Material (ppm) | Initial Discharge Capacity (mAh/g) | Initial Efficiency (%) | Discharge Capacity at 5th-Cycle (mAh/g) |
|---|---|---|---|---|---|
| 25 | Negative electrode prepared in Example 13 | 31 | 262 | 91 | 268 |
| 26 | Negative electrode prepared in Example 14 | 81 | 279 | 91 | 286 |
| 27 | Negative electrode prepared in Comparative Example 13 | 200 | 244 | 91 | 207 |
| 28 | Negative electrode prepared in Comparative Example 14 | 1100 | 250 | 90 | 231 |

**[Table 8 ]**

| Test Example | Negative Electrode Material Used | Content of Na in Negative Electrode Material (ppm) | Initial Discharge Capacity (mAh/g) | Initial Efficiency (%) | Discharge Capacity at 5th-Cycle (mAh/g) |
|---|---|---|---|---|---|
| 29 | Negative electrode prepared in Example 15 | 110 | 255 | 90 | 251 |
| 30 | Negative electrode prepared in Example 16 | 140 | 220 | 90 | 215 |
| 31 | Negative electrode prepared in Comparative Example 15 | 180 | 204 | 91 | 183 |
| 32 | Negative electrode prepared in Comparative Example 16 | 560 | 219 | 91 | 196 |

### Preparation Example 6 of a non-aqueous electrolyte secondary battery

Each of the non-aqueous electrolyte secondary batteries was prepared by using 2032 typed coin cell, the negative electrode obtained in each of Examples 17 to 18 and Comparative Examples 17 to 18 as a working electrode, lithium metal as a counter electrode, and one wherein LiPF₆ was dissolved in propylene carbonate (LiPF₆ concentration: 1 mol/L) as an electrolyte.

### Test Examples 33 to 36

The evaluation of the electrochemical property of the non-aqueous electrolyte secondary battery prepared in Preparation Example 6 of a non-aqueous electrolyte secondary battery was conducted according to the test method described in the above-mentioned Test Examples 1 to 8. The results are shown in Table 9. In Table 9, the results of analyzing the content of sodium included in the negative electrode material used with an inductively-coupled plasma emission spectrometric analysis apparatus (ICP-AES) are also shown.

**[Table 9]**

| Test Example | Negative Electrode Material Used | Content of Na in Negative Electrode Material (ppm) | Initial Discharge (mAh/g) | Initial Capacity Efficiency (%) | Discharge Capacity at 5th-Cycle (mAh/g) |
|---|---|---|---|---|---|
| 33 | Negative electrode prepared in Example 17 | 14 | 203 | 77 | 186 |
| 34 | Negative electrode prepared in Example 18 | 37 | 202 | 77 | 184 |
| 35 | Negative electrode prepared in Comparative Example 17 | 100 | 185 | 77 | 167 |
| 36 | Negative electrode prepared in Comparative Example 18 | 710 | 188 | 77 | 170 |

### Example 19

Zero point three (0.3) gram of natural graphite of which BET specific surface area was 6.0 m²/g and of which surface separation (d₀₀₂) of (002) surface measured by wide-angle X-ray diffraction method was 3.354 Å was dispersed in 100 mL of 0.1% by weight aqueous trisodium phosphate solution. The dispersion liquid obtained was stirred for 30 minutes, and then, suction filtration was conducted. The solid obtained was dried in a vacuum at 100°C for 6 hours to obtain natural graphite on which trisodium phosphate adhered (negative electrode material).

Into N-methyl-2-pyrrolidone, 9 parts by weight of the negative electrode material and 1 part by weight of polyvinylidene fluoride (binder) were added to obtain slurry. The slurry was applied on a copper foil of a current collector and then, dried and further pressed to prepare a negative electrode.

### Example 20

A negative electrode was prepared according to the same manner as that in Example 19 except that 0.5% by weight aqueous trisodium phosphate solution was used in place of 0. 1% by weight aqueous trisodium phosphate solution.

### Comparative Example 19

A negative electrode was prepared according to the same manner as that in Example 19 except that 0.1% by weight aqueous sodium chloride solution was used in place of 0.1% by weight aqueous trisodium phosphate solution.

### Comparative Example 20

A negative electrode was prepared according to the same manner as that in Example 19 except that 0. 5% by weight aqueous sodium chloride solution was used in place of 0.1% by weight aqueous trisodium phosphate solution.

### Example 21

A negative electrode was prepared according to the same manner as that in Example 19 except that synthetic graphite of which BET specific surface area was 4.0 m²/g and of which surface separation (d₀₀₂) of (002) surface measured by wide-angle X-ray diffraction method was 3.358 Å was used in place of natural graphite of which BET specific surface area was 6.0 m²/g and of which surface separation (d₀₀₂) of (002) surface measured by wide-angle X-ray diffraction method was 3.354 Å.

### Example 22

A negative electrode was prepared according to the same manner as that in Example 21 except that 0.5% by weight aqueous trisodium phosphate solution was used in place of 0.1% by weight aqueous trisodium phosphate solution.

### Comparative Example 21

A negative electrode was prepared according to the same manner as that in Example 21 except that 0.1% by weight aqueous sodium chloride solution was used in place of 0.1% by weight aqueous trisodium phosphate solution.

### Comparative Example 22

A negative electrode was prepared according to the same manner as that in Example 21 except that 0.5% by weight aqueous sodium chloride solution was used in place of 0.1% by weight aqueous trisodium phosphate solution.

### Example 23

A negative electrode was prepared according to the same manner as that in Example 19 except that hard carbon of which BET specific surface area was 4.0 m²/g and of which surface separation (d₀₀₂) of (002) surface measured by wide-angle X-ray diffraction method was 3.786 Å was used in place of natural graphite of which BET specific surface area was 6.0 m²/g and of which surface separation (d₀₀₂) of (002) surface measured by wide-angle X-ray diffraction method was 3.354 Å.

### Example 24

A negative electrode was prepared according to the same manner as that in Example 23 except that 0.5% by weight aqueous trisodium phosphate solution was used in place of 0.1% by weight aqueous trisodium phosphate solution.

### Comparative Example 23

A negative electrode was prepared according to the same manner as that in Example 23 except that 0.1% by weight aqueous sodium chloride solution was used in place of 0.1% by weight aqueous trisodium phosphate solution.

### Comparative Example 24

A negative electrode was prepared according to the same manner as that in Example 23 except that 0.5% by weight aqueous sodium chloride solution was used in place of 0.1% by weight aqueous trisodium phosphate solution.

### Preparation Example 7 of a non-aqueous electrolyte secondary battery

### Each of the non-aqueous electrolyte secondary batteries was prepared by using 2032 typed coin cell, the negative electrode obtained in each of Examples 21 to 22 and Comparative Examples 21 to 22 as a working electrode, lithium metal as a counter electrode, and one wherein LiPF₆ was dissolved in a mixed solvent of ethylene carbonate and diethyl carbonate (ethylene carbonate:diethyl carbonate=1:1 (weight ratio)) (LiPF₆ concentration: 1 mol/L) as an electrolyte.

### Test Examples 37 to 40

The evaluation of the electrochemical property of the non-aqueous electrolyte secondary battery prepared in Preparation Example 7 of a non-aqueous electrolyte secondary battery was conducted according to the test method described in the above-mentioned Test Examples 1 to 8. The results are shown in Table 10. In Table 10, the results of analyzing the content of sodium included in the negative electrode material used with an inductively-coupled plasma emission spectrometric analysis apparatus (ICP-AES) are also shown.

**[Table 10]**

| Test Example | Negative Electrode Material Used | Content of Na in Negative Electrode Material (ppm) | Initial Discharge Capacity (mAh/g) | Initial Efficiency (%) | Discharge Capacity at 5th-Cycle (mAh/g) |
|---|---|---|---|---|---|
| 37 | Negative electrode prepared in Example 21 | 99 | 231 | 90 | 221 |
| 38 | Negative electrode prepared in Example 22 | 950 | 250 | 91 | 241 |
| 39 | Negative electrode prepared in Comparative Example 21 | 180 | 204 | 91 | 183 |
| 40 | Negative electrode prepared in Comparative Example 22 | 560 | 219 | 91 | 196 |

### Preparation Example 8 of a non-aqueous electrolyte secondary battery

Each of the non-aqueous electrolyte secondary batteries was prepared by using 2032 typed coin cell, the negative electrode obtained in each of Examples 23 to 24 and Comparative Examples 23 to 24 as a working electrode, lithium metal as a counter electrode, and one wherein LiPF₆ was dissolved in propylene carbonate (LiPF₆ concentration: 1 mol/L) as an electrolyte.

### Test Examples 41 to 44

The evaluation of the electrochemical property of the non-aqueous electrolyte secondary battery prepared in Preparation Example 8 of a non-aqueous electrolyte secondary battery was conducted according to the test method described in the above-mentioned Test Examples 1 to 8. The results are shown in Table 11. In Table 11, the results of analyzing the content of sodium included in the negative electrode material used with an inductively-coupled plasma emission spectrometric analysis apparatus (ICP-AES) are also shown.

**[Table 11]**

| Test Example | Negative Electrode Material Used | Content of Na in Negative Electrode Material (ppm) | Initial Discharge Capacity (mAh/g) | Initial Efficiency (%) | Discharge Capacity at 5th-Cycle (mAh/g) |
|---|---|---|---|---|---|
| 41 | Negative electrode prepared in Example 23 | 130 | 197 | 75 | 173 |
| 42 | Negative electrode in prepared in Example 24 | 820 | 191 | 75 | 170 |
| 43 | Negative electrode prepared in Comparative Example 23 | 100 | 185 | 77 | 167 |
| 44 | Negative electrode prepared in Comparative Example 24 | 710 | 188 | 77 | 170 |

From the results of Table 1 to Table 11, it is found that the discharge capacity of the non-aqueous electrolyte secondary battery having the negative electrode material containing sodium acetate, sodium sulfate, sodium tetraborate or trisodium phosphate is bigger than that of the non-aqueous electrolyte secondary battery having a negative electrode material containing sodium chloride, and its superior performance is developed.

### Industrial Applicability

The non-aqueous electrolyte secondary battery comprising the negative electrode material for a non-aqueous electrolyte secondary battery of the present invention shows better electric performance because of improvement of its discharge capacity. The non-aqueous electrolyte secondary battery can be used for various known uses such as small devices such as notebook computers, stylus-operated personal computers, mobile personal computers, electronic book players, cell-phones, potable facsimiles, portable copy machines, portable printers, headphone stereos, video movies, liquid crystal televisions, handy cleaners, portable CDs, minidisks, transceivers, electronic notebooks, calculators, memory cards, portable tape recorders, radios, back-up power sources, motors, lighting apparatuses, toys, game instruments, watches, electronic flashes and cameras; and large devices such as battery cars and hybrid cars.

## Claims

1. A negative electrode material for a non-aqueous electrolyte secondary battery, which comprises a negative electrode active material capable of absorbing and releasing a lithium ion and at least one salt selected from the group consisting of a carboxylic acid salt of an alkali metal, a carboxylic acid salt of an alkali earth metal, a sulfuric acid salt of an alkali metal, a sulfuric acid salt of an alkali earth metal, a boric acid salt of an alkali metal, a boric acid salt of an alkali earth metal, a phosphoric acid salt of an alkali metal and a phosphoric acid salt of an alkali earth metal.

2. The negative electrode material for a non-aqueous electrolyte secondary battery according to claim 1, wherein at least one salt is a carboxylic acid salt of an alkali metal, a sulfuric acid salt of an alkali metal, a boric acid salt of an alkali metal or a phosphoric acid salt of an alkali metal.

3. The negative electrode material for a non-aqueous electrolyte secondary battery according to claim 1, wherein at least one salt is a carboxylic acid salt of an alkali metal and/or a carboxylic acid salt of an alkali earth metal.

4. The negative electrode material for a non-aqueous electrolyte secondary battery according to claim 1, wherein at least one salt is a sulfuric acid salt of an alkali metal and/or a sulfuric acid salt of an alkali earth metal.

5. The negative electrode material for a non-aqueous electrolyte secondary battery according to claim 1, wherein at least one salt is a boric acid salt of an alkali metal and/or a boric acid salt of an alkali earth metal.

6. The negative electrode material for a non-aqueous electrolyte secondary battery according to claim 1, wherein at least one salt is a phosphoric acid salt of an alkali metal and/or a phosphoric acid salt of an alkali earth metal.

7. The negative electrode material for a non-aqueous electrolyte secondary battery according to any of claims 1 to 6, wherein the negative electrode active material contains graphite and/or a carbon material of which crystallinity is lower than that of graphite as a main component.

8. The negative electrode material for a non-aqueous electrolyte secondary battery according to claim 7, wherein a specific surface area of graphite and the carbon material of which crystallinity is lower than graphite is 1 to 600 m²/g.

9. The negative electrode material for a non-aqueous electrolyte secondary battery according to claim 1, 2 or 3, wherein the carboxylic acid salt of an alkali metal is sodium acetate.

10. The negative electrode material for a non-aqueous electrolyte secondary battery according to claim 1, 2 or 4, wherein the sulfuric acid salt of an alkali metal is sodium sulfate.

11. The negative electrode material for a non-aqueous electrolyte secondary battery according to claim 1, 2 or 5, wherein the boric acid salt of an alkali metal is sodium borate.

12. The negative electrode material for a non-aqueous electrolyte secondary battery according to claim 1, 2 or 6, wherein the phosphoric acid salt of an alkali metal is sodium phosphate.

13. The negative electrode material for a non-aqueous electrolyte secondary battery according to claim 1, which is obtained by mixing an aqueous solution containing at least one salt selected from the group consisting of a carboxylic acid salt of an alkali metal, a carboxylic acid salt of an alkali earth metal, a sulfuric acid salt of an alkali metal, a sulfuric acid salt of an alkali earth metal, a boric acid salt of an alkali metal, a boric acid salt of an alkali earth metal, a phosphoric acid salt of an alkali metal and a phosphoric acid salt of an alkali earth metal with a negative electrode active material capable of absorbing and releasing a lithium ion followed by removing water from the mixture obtained.

14. The negative electrode material for a non-aqueous electrolyte secondary battery according to claim 1, wherein the content of the salt is 50 to 10000 ppm in metal equivalent.

15. The negative electrode material for a non-aqueous electrolyte secondary battery according to claim 1, which further contains a binder and a solvent.

16. The negative electrode material for a non-aqueous electrolyte secondary battery according to claim 15, wherein the binder is at least one selected from the group consisting of polyvinylidene fluoride, polytetrafluoroethylene, fluorinated polyvinylidene fluoride, ethylene-propylene-diene ternary copolymer, styrene-butadiene rubber, acrylonitrile-butadiene rubber, fluoro-rubber, polyvinyl acetate, polymethyl methacrylate, polyethylene and nitrocellulose.

17. The negative electrode material for a non-aqueous electrolyte secondary battery according to claim 15, wherein the solvent is at least one selected from the group consisting of N-methylpyrrolidone, N,N-dimethylformamide, N,N-dimethylacetamide, methyl ethyl ketone, cyclohexanone, methyl acetate, methyl acrylate, diethyltriamine, N,N-dimethylaminopropylamine, ethylene oxide, tetrahydrofuran and water.

18. A non-aqueous electrolyte secondary battery comprising a positive electrode comprising a positive electrode active material capable of absorbing and releasing a lithium ion, a negative electrode comprising the negative electrode material for a non-aqueous electrolyte secondary battery according to claim 1 and a non-aqueous electrolyte.

19. The non-aqueous electrolyte secondary battery according to claim 18, wherein the positive electrode active material is a lithium-transition metal composite oxide.

20. The non-aqueous electrolyte secondary battery according to claim 19, wherein the lithium-transition metal composite oxide contains manganese.
